# EUROPEAN PATENT SPECIFICATION

(11) **EP 1 260 522 B1**
(45) Date of publication and mention of the grant of the patent: **26.04.2006**
(21) Application number: 01830331.3
(22) Date of filing: 23.05.2001
(51) Int. Cl.: C08B 11/00, C08B 15/10

(54) **Linen fibers comprising O-alkylated cellulose and process for the preparation thereof**
Leinenfasern, die O-alkylierte Celluloseether enthalten, und Verfahren zu deren Herstellung
Fibres de lin comprenant des éthers cellulosiques O-alkylés et procédé de préparation

(43) Date of publication of application: 27.11.2002
(73) Proprietor: Linificio e Canapificio Nazionale S.p.A., 24045 Fara Gera d'Adda (BG) (IT)
(72) Inventor: Comoli, Maura, 20125 Milano (IT); Gastaldi, Giuseppe, 27044 Canneto Pavese (PV) (IT); Torri, Giangiacomo, 20131 Milano (IT); Vismara, Elena, 20131 Milano (IT)
(74) Representative: Cleva, Maria Giovanna

(56) References cited:
- WO-A-89/09643
- FR-A- 2 774 380
- JP-A- 10 251 301
- US-A- 2 057 163
- US-A- 3 903 076
- US-A- 5 001 232

## Description

### Field of the invention

The present invention relates to O-alkylated celluloses having a distinct crystalline form, named allomorph I, wherein the starting material in the preparation of the O-alkylated cellulose are linen fibers, as well as to a process for their preparation.

### Background of the invention

Cellulose is a natural polysaccharide, produced mainly by plants, but also by bacteria and molluscs. It is the chief constituent of fibers of plants and it is widely used for the preparation of cellulosic products such as, for example, textile fibers and fabrics, absorbent fluffs, artificial skin or ion-exchange resins. It is the basic material for the paper industry and it is also used in the food industry as stabilizer, thickener or as additive with no calories in dietetic preparations. Furthermore some derivatives of cellulose, such as nitrocellulose or cellulose acetates, are utilized for manufacturing explosives, lacquers, rubber and celluloid substitutes, water-proofing fabrics and so on. From a chemical point of view, cellulose is a beta-1,4-linked polymer of D-glucopyranose and it occurs in several distinct crystalline forms known as allomorphs, such as for instance cellulose I, II, III and IV [see A. Sarko in New developments of industrial polysaccharides, page 87, Ed. V. Crescenzi, I.C.M.]. Cellulose allomorphs can be identified by a variety of analytical techniques, such as spectroscopical (IR, Raman or solid state ¹³C-NMR spectroscopy) and diffractional (electron, neutron or x-ray diffraction) techniques.

Cellulose I and cellulose II are the commercially dominant allomorphs of cellulose.

Cellulose I ("native cellulose") is the form naturally occurring in nearly all plants while cellulose II, also known as "hydrate" cellulose, is mainly produced by treatment of cellulose I with strong basic agents such as concentrated aqueous potassium or sodium hydroxides. Such a treatment, known as mercerization, is commonly used for removing the non-cellulosic components, such as lignin and hemicelluloses, from raw materials containing cellulose. It causes the irreversible transition of cellulose I to the thermodynamically more stable cellulose II.

Fibers made of cellulose I are characterized, in the dry state, by a greater breaking load resistance and, most of all, by a typical brightness and luster that are particularly appreciated in the textile field. In this context, linen fabrics mainly made by native cellulose I and characterized by high resistance, unique beauty and freshness, can be mentioned.

On the contrary, mercerized cellulose fibers and fabrics are deprived of the beauty and resistance of natural materials.

Nevertheless natural cellulose I fibers show a significant drawback, that is they loose much of their strength when wet. In fact the hydrogen bonds between hydroxyls of neighboring fibers, which are very strong in a dry state, are considerably weakened by water. This inconvenient can limit the applicability of natural fibers, especially in those fields in which a high breaking resistance, even in a wet state, is required.

Furthermore another aspect of the same problem is represented by the low wet and dry crease resistance of some textiles made of cellulose 1. In this case cellulose I microfibers do not spontaneously recover the initial arrangement after washing and drying and, unavoidably, an additional ironing step is required in order to return to the original shape. This inconvenient is particularly relevant for linen fabrics.

With the aim to improve wet strength and crease recovery of raw cellulosic materials, and optionally, to confer new additional advantageous properties, several chemical treatments are usually performed on natural fibers.

Unfortunately most of those chemical processes cause the irreversible conversion of cellulose I into cellulose II and, consequently, the unavoidable loss of all the desirable properties of native materials.

Among the most common chemical treatments performed on cellulose materials, esterification and etherification reactions can be cited.

For instance, an esterification process for preparing polyanhydride cross-linked fibrous cellulosic products is claimed in the International patent application WO 98/13545 [Amoco Corporation]. However a significant drawback of these derivatives, that makes them scarcely attractive from a practical viewpoint, is the low stability of ester bonds: in fact they are cleaved under alkaline conditions, as usually happens by repeated laundry, especially with strong detergents. As a consequence the above materials, because of their increased wet strength, can be successfully used in paper industry or for disposable article, such as for example diapers or incontinence products, but are less suitable for manufacturing fabrics or other durable goods.

In this context, alkylation reactions are preferable because of the greater strength of ether bonds compared to ester bonds and therefore they are more suited for the preparation of stable products, as required, for instance, in the textile industry or in the field of ion-exchange resins.

The known processes for preparing cellulose ethers are generally carried out in two stages, with the preparation of the "alkali cellulose" taking place first followed by its etherification. Alkali cellulose is, in turn, prepared by mixing cellulose, as homogeneously as possible, with water and alkali metal hydroxides in suitable industrial units. The etherification stage is usually carried out by reacting the alkali cellulose produced in the first stage together with an etherifying agent.

For example an etherification process, in which cellulose is alkylated in an aqueous alkaline medium in the presence of a water-miscible cyclic ether as suspending agent, is claimed in the United States patent n. 5,493,013 [Hoechst Aktiengesellschaft].

However the strong initial treatment with aqueous alkali unavoidably compromises the crystalline structure of native cellulose.

US 3,903,076 discloses a process for the preparation of ethers of polysaccharides by reacting an alkali metal polysaccharide with, inter alia, a vicinal epoxide, in the presence of a liquid organic diluent. The obtained ethers are useful for preparing adhesives with water, as color developers, flow and leveling improvers in latex paint and as thickener for a variety of food products.

A particular example of etherification process very often applied to cellulose fibers is represented by cross-linking reactions. Such reactions, by linking together hydroxyl groups of different cellulose chains with strong covalent bonds instead of weak hydrogen bonds, can improve several properties of the final products, such as wet strength or crease resistance. Nevertheless, the rather drastic aqueous alkaline conditions can irreversibly alter the appearance and the crystalline structure of cellulosic materials and, therefore, not always, they applies to textiles.

For instance, a cellulose cross-linking process that provides superabsorbent articles is described in the International patent application WO96/15154 [The Procter & Gamble Company]. However the reported reaction conditions, that confer good absorbing properties to those cellulosic materials, would not be usable in the textile field in that they would spoil the look and the resistance of cellulose natural fibers.

There are a few examples of cross-linking reactions performed on fabrics and, very often, they use formaldehyde as cross-linker. For instance, a cross-linking treatment of cellulose fabrics with formaldehyde is claimed in the United States patent n. 3,663,974 [Toyo Spinning Co Ltd.]. Nevertheless a significant drawback of those derivatives is the scarce stability of the resultant bonds that slowly degrade and release formaldehyde.

Some different cross-linking reagents for cellulosic textiles have been investigated but they generally require high temperatures or aqueous basic conditions that can damage the native structure of cellulose [see, as an example, the cross-linking process claimed in US6,036,731 in the name of Ciba SC Holding AG].

On the contrary, it would be highly desirable to provide stable O-alkylated derivatives of cellulose, preferably cellulose I, by using very mild etherification reactions, in which the strength and the beautiful appearance of the natural fibers are maintained.

### Summary of the invention

We have now surprisingly found a new method for manufacturing O-alkylated derivatives of cellulose, and more preferably new O-alkylated derivatives of cellulose I, characterized in that the crystalline structure of the starting cellulose is not altered by the reaction conditions, providing final cellulosic products maintaining the same allomorph structure and resistance of the original fibers.

Therefore it is an object of the present invention an O-alkylated cellulose I of formula I 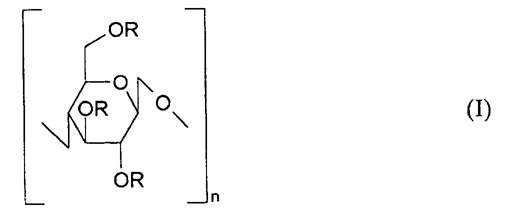 wherein
- n: is an integer from 100 to 100,000
- R: is a hydrogen, a group of formula AX in which A is a bivalent bridging radical comprising from 1 to 100 carbon atoms and, optionally, from 1 to 50 heteroatoms selected among halogens, oxygen, nitrogen, sulphur, boron, phosphorus and silicon, and
- X: is a hydrogen, a functional group selected among vinyl, aziridino, epoxy, glycidyl, halo, acyloxy, alkylsulphonate, arylsulphonate, trialkylsiloxy, sulphate, phosphate, ethynyl, amino, mono-, di- amino, trialkylammonium, carboxy, sulphonic, phosphonic, formyl, alkylsulphonylamino, arylsulphonylamino, aminosulphonyl, acylamino, imino, mono-, di(carboxyalkyl)imino, guanidino, nitro, cyano, alkoxycarbonyl, aminocarbonyl, thioureido, mercapto, aminomethylphosphonic, alkylthio groups or an 0-cellulose I radical derived from formula I;
provided that AX groups are present in a AX/n ratio from 0.0001 to 3, wherein the starting material in the preparation of the O-alkylated cellulose are linen fibers.

Another object of the present invention is a process for preparing an O-alkylated cellulose according to claims 1-5 comprising the steps of:
a) applying an alkylating reagent to cellulose containing materials and
b) treating with a base in a non-aqueous medium.

### Detailed description of the invention

In the present invention with the term O-alkylated cellulose I an alkylated cellulose having an allomorph I crystalline state is intended. The term alkylated means that some hydroxyl groups of cellulose I are covalently linked to a carbon atom of a bivalent bridging radical A thus providing an ether derivative.

In particular, according to the present invention, the number of hydroxyls per glucose unit of cellulose I that can be alkylated ranges from 0.0001 to 3, as expressed by the above reported AX/n ratio.

A preferred AX/n value is from 0.001 to 1; a particularly preferred one is from 0.005 to 0.15.

As far as the position of hydroxyls of cellulose I involved in the alkylation is concerned, any possible isomer is encompassed within the scope of the present invention.

In addition, as the present etherification is an heterogeneous reaction, the final distribution of AX groups can be irregular. In particular the extent of alkylation could be higher on the surface of the fiber and negligible inside. However it is within the scope of the present invention any composition comprising O-alkylated cellulose I of formula I, optionally together with non alkylated cellulose I fibers.

The formula I of the present invention includes an integer n whose value covers all molecular weights for which cellulose can exist in an allomorph I crystalline state.

A value of n ranging from 1,000 to 60,000 is preferred, one from 5,000 to 50,000 is particularly preferred.

The radical R in formula I can represent a hydrogen, in such a case being the hydroxy group of cellulose unsubstituted.

The radical R can also represent an AX group wherein A is a bivalent bridging radical comprising from 1 to 100 carbon atoms and, optionally, from 1 to 50 heteroatoms selected among halogens, oxygen, nitrogen, sulphur, boron, phosphorus and silicon.

It is within the scope of the present invention a cellulose I in which at least one R residue for every ten thousand glucose units is an AX group.

With the term "a bivalent bridging radical A" an aliphatic, aromatic or heteroaromatic radical that connects an oxygen of a cellulose I chain with a X group or cross-links two oxygens of different cellulose I chains is intended.

The bivalent radical A includes linear, branched or cyclic aliphatic radicals such as methylene, ethylidene, propylidene, isopropylidene, butylidene, pentylidene, hexylidene, heptylidene, octylidene, nonylidene, decylidene, dodecylidene, tetradecylidene, hexadecylidene, heptadecylidene, octadecylidene, cyclohexylidene and the like. Preferred bivalent aliphatic radicals A are C₁-C₁₈ aliphatic linear radicals.

Radical A may optionally include double or triple bonds and from 1 to 50 heteroatoms selected from halogens, oxygen, nitrogen, sulphur, boron, phosphorus and silicon.

These heteroatoms can alternate with carbon atoms along the bridging chain or can represent side functional groups linked to the bridging chain.

Examples of heteroatom-containing radicals A are poly(oxyethylene), poly(oxypropylene), poly(vinylchloride), poly(ethyleneimine), poly(propyleneimine) and the like.

Examples of heterogroups linked to the bridging chain are halogens, amino or hydroxyl groups.

According to the present invention preferred heteroatom containing bivalent bridging radicals A are poly(oxyethylene), poly(oxypropylene), poly(ethyleneimine) and poly(propyleneimine), optionally substituted by one or more hydroxy groups.

Bivalent radicals A comprising aromatic systems, such as benzene, naphthalene, anthracene, phenantrene, fluorene and the like, or heterocyclic rings such as furan, pyrrole, thiophene, pyrazole, imidazole, triazole, thiazole, isothiazole, oxazole, isoxazole, pyridine, pyrimidine, pyrazine, pyridazine, quinoline, isoquinoline, tetrahydrofuran, dioxane, tetrahydropyran, piperidine, dihydropyran, dihydropyridine, optionally benzo-condensed, and the like are also included in the present invention.

As already reported, the radical R can be an AX group, in which X represents a hydrogen or a functional group or an O-cellulose I radical derived from formula I.

Preferred functional groups are selected from vinyl, aziridino, epoxy, glycidyl, halo, acyloxy, alkylsulphonate, arylsulphonate, trialkylsiloxy, sulphate, phosphate, ethynyl, amino, mono-, di- amino, trialkylammonium, carboxy, sulphonic, phosphonic, formyl, alkylsulphonylamino, arylsulphonylamino, aminosulphonyl, acylamino, imino, mono-, di(carboxyalkyl)imino, guanidino, nitro, cyano, alkoxycarbonyl, aminocarbonyl, thioureido, mercapto, aminomethylphosphonic and alkylthio groups.

In particular, functional groups, hereinafter defined as reactive groups X', that are able to react with the hydroxyls of cellulose I providing an ether bond, such as vinyl, aziridino, epoxy, glycidyl, halo, acyloxy, alkylsulphonate, arylsulphonate, trialkylsiloxy, sulphate and phosphate, constitute a first class of functional groups. When X is a reactive group X', a further derivatization is therefore possible.

Example of preferred reactive groups are vinyl, 1,2-epoxyethyl, chloro, bromo, iodo, acetoxy, trifluoroacetoxy, tosylate, mesylate, triflate and the like. However for a more detailed definition of X' reactive groups, reference is made to alkylating reagents described below.

A second class of functional groups is represented by ionizable or charged groups such as amino, mono-, di- amino, trialkylammonium, carboxy, sulphonic, phosphonic and the like. Nevertheless, any other ionizable or charged group commonly used in the field of ion-exchange resins is also meant.

A group of preferred O-alkylated cellulose I of formula I, according to the present invention, includes those compounds in which A is a C₁-C₁₈ alkyl radical and X is a ionizable or charged group as defined above.

Compounds of formula I in which A is a C₃-C₁₂ alkyl and X is trimetylammonium are particularly preferred.

According to the present invention, another class of functional groups X include chelating groups such as formyl, alkylsulphonylamino, arylsulphonylamino, aminosulphonyl, acylamino, imino, mono-, di(carboxyalkyl)imino, guanidino, nitro, cyano, alkoxycarbonyl, aminocarbonyl, thioureido, mercapto, aminomethylphosphonic, alkylthio and the like. However any other chelating group commonly used as ligand for metal ions is within the scope of the present invention.

A group of preferred derivatives of formula I includes the compounds in which A is a C₃-C₁₂ alkyl radical and X is a chelating group, such as, for example, iminodiacetate, thiourea, aminomethylphosphonic acid and the like.

As previously defined, X can be a hydrogen, a functional group or an O-cellulose I radical derived from formula I.

When X represents an O-cellulose I radical derived from formula I the bridging radical A, previously defined, cross-links two different chains of cellulose I of formula I.

A preferred group of those cross-linked derivatives includes compounds of formula I in which A is poly(oxyethylene), poly(oxypropylene), poly(ethyleneimine) and poly(propyleneimine), optionally substituted by one or more hydroxy groups, and X is an O-cellulose I radical derived from formula I.

Other preferred compounds are derivatives of formula I wherein A is 2-hydroxypropylidene and X is an O-cellulose I radical derived from formula I.

The extent of cross-linking can vary according to AX/n definition given above. Preferred cross-linked cellulose I derivatives of formula I are those in which AX/n ratio per glucose unit is from 0.0001 to 3, particularly preferred those in which AX/n is from 0.001 to 1, most preferred those with AX/n from 0.05 to 0.15

Another object of the present invention is a process for preparing an O-alkylated cellulose comprising the steps of:
a) applying an alkylating reagent to cellulose containing materials and
b) treating with a base in a non-aqueous medium.

It is possible to apply the two steps in any order, i.e. first step a) and then step b) or first step b) followed by step a). However, it is preferable to perform step a) before step b).

The present process is particularly mild and can be successfully applied to any cellulose material. A relevant advantage is that it does not significantly alter the appearance, the strength and the crystalline structure of starting materials.

Starting materials suitable for the process according to the present invention are linen fibers and blends thereof with other fibers, such as synthetic fibers.

The term "fibers" is meant with a very wide meaning, including any fibrous cellulosic material, preferably crystallized as allomorph I, not only in the form of textile fibers, such as ribbons, slivers, yarns, threads, fabrics, textiles and fibers at all possible stages of processing, but also in the form of other fibers occurring for instance in paper, wood pulp and so on.

However, because of the technical problems that could arise by applying the above process to finished textile materials such as threads and fabrics, it is preferably applied to unrefined cellulosic materials, such as for example slivers.

Cellulosic starting materials used in the present invention may contain a certain amount of water. For example linen has an average content of water of about 14%. According to the present process, starting materials do not generally need any previous dehydrating step, but can be used as such.

The process of the present invention comprises a step a) in which an alkylating agent is applied to cellulose, preferably cellulose I, containing materials.

As alkylating agents, reagents able to alkylate hydroxy groups of cellulose and to form ether derivatives according to formula I, are meant.

In particular alkylating reagents suited for the present process include compounds of formula

X'-A-X (II)

in which X' represents a reactive group while X and A have the meanings previously defined.

When X is a hydrogen or a non reactive group, the reagent of formula II will react only with one hydroxyl of cellulose, providing an ether derivative with a side chain.

Otherwise, when both X and X' are reactive groups, being X' and X the same or different, the reagent II is difunctionalized. Therefore it can react twice, by cross-linking two different cellulose chains, or it can react once, furnishing derivatives of formula I in which R is AX'. In this last case the derivative can react further.

According to the present invention, with the term "reactive group", any functional group that reacts with the hydroxyls of cellulose is meant. Such reactive groups include, for example, detachable groups, activated unsaturated groups, formyl, aziridino and epoxy groups.

Example of detachable groups, also known as leaving groups, are halogens, cyano, triflate, mesylate, tosylate, trifluoroacetate, ammonium, sulphate, p-nitrobenzoate, phosphato, acetoxy, propionyloxy and the like. Halogens are preferred leaving groups.

Chloro is particularly preferred.

Activated unsaturated groups are for example vinyl, halovinyl, styryl, acryloyl or methacryloyl groups.

Further reactive groups according to the present invention are formyl, comprising masked formyls, aziridino and epoxy groups, such as for instance ethylene or propylene oxides, and the like. Preferred alkylating reagents contain glycidyl residues.

In general, a cross-linking reagent suitable for preparing derivatives of formula I in which X is an O-cellulose radical, preferably cellulose I radical, of formula I, is any bifunctional compound of formula II X'-A-X', in which A and X' have the meanings defined above, that will preferentially react with the hydroxy groups of cellulose rather than undergoing self polymerization.

Typical bifunctional compounds useful as cross-linking agents are those compounds that contain at least two reactive groups X', the same or different, as defined above, on a aliphatic, aromatic or heterocyclic radical A, as previously defined.

A preferred group of cross-linking reagents comprises compounds of formula II in which A is selected among poly(oxyethylene), poly(oxypropylene), poly(ethyleneimine) or poly(propyleneimine), and X and X', the same, are selected among 1,2-epoxyethyl, vinyl or chloro.

A preferred group of cross-linking reagents according to the present invention is represented by diglycidyl reagents.

A particularly preferred reagent is poly(propylene glycol)diglycidyl ether.

Other preferred cross-linking reagents have X different from X', in particular X is a halogen and X' is 1,2-epoxyethyl. Among these reagents epichlorohydrin is particularly preferred.

The application of the alkylating reagent generally comprises the imbibition of the cellulose containing material with the commercial grade reagent, the removal of the exceeding reagent by centrifugation, and finally the evaporation of water by distillation under vacuum. The last dehydrating step is performed exclusively in order to eliminate the surplus water. Any other known technique commonly used in the field for removing exceeding reagents or water is suitable for the present process as well.

The alkylating reagent can be used as such or can be previously dissolved in a suitable solvent.

The imbibition of step a) of the present process is generally performed at a mild temperature and for the time needed to saturate the starting material

Step b) of the process, according to the present invention, comprises the treatment of cellulosic material, preferably cellulose 1 previously processed according to step a), with a base in a non-aqueous medium.

With the term "base" any basic reagent which is able to activate the hydroxy groups of cellulose towards alkylation is meant. Suitable bases are both organic and inorganic bases. Examples of organic base are nitrogen-containing compounds such as amines, pyridines and the like. Examples of inorganic bases are alkaline hydroxides and ammonia. Other suitable basic reagents are, for instance, quaternary ammonium hydroxides, alkaline alcoholates or carbanions. They are commercially available or can be prepared by known methods.

Preferred bases for the process of the present invention are alkaline hydroxides and alcoholates. Among them sodium and potassium hydroxide, sodium methoxide and ethoxide are the most preferred.

As already stated, step b) of the process, according to the present invention, comprises the treatment of cellulosic material, preferably cellulose I previously processed according to step a), with a base in a non-aqueous medium.

With the term "non aqueous medium" a polar solvent with a low content of water is intended. The absence of water is important for the present process, however commercially available "pure grade" solvents can successfully be used without any further dehydrating treatment.

Polar solvents suitable for the present process are able to dissolve or to suspend the base without giving side reactions or irreversibly altering the cellulose crystalline structure.

However, it is also possible to add a suitable dissolving agent in order to dissolve the selected base, such as for instance a phase transfer catalyst and the like.

Solvents particularly suited for the present purpose are, for instance, alcohols, such as methanol, ethanol, n-propanol, i-propanol, n-butanol, ter-butanol and the like.

Methanol, ethanol and i-propanol are preferred. I-propanol is particularly preferred from an industrial point of view.

The base is usually dissolved in the selected solvent and then the resultant solution is used in step b). The concentration of non-aqueous basic solutions used in step b) of the present invention can vary. Suitable values of concentration are those sufficient to activate hydroxy groups of cellulose towards alkylation. Examples of usable ranges of concentration are 1-30% (w/v) for alkaline hydroxides and 0.01-5M for alcoholates.

In a preferred embodiment, the cellulosic material processed according to step a), is dipped into the non-aqueous basic solution above described, at a temperature and for a time needed to complete the reaction.

After completion of the alkylation, the cellulose material is repeatedly washed, at first with the same solvent selected for step b) and then with water up to neutral pH.

The process of the present invention has a very wide applicability. In fact it allows to O-alkylate native cellulose, and more generally any cellulose, without altering the initial crystalline state. As a consequence it is possible to ameliorate the properties of cellulosic materials without loosing the qualities of native cellulose, that is, for instance the typical strength and brightness of natural fibers. A further advantage of the present process is that it can be performed as a continuous process.

All these aspects make the present invention particularly attractive from an industrial viewpoint.

In order to better illustrate the present invention, without limiting it, the following examples are now given.

### Example 1

### Evaluation methods

The extent of the alkylation and the crystalline state of the samples were evaluated by solid state ¹³C-NMR spectroscopy (CP/MAS and MAS techniques) and by ¹³C-NMR spectroscopy, performed on D₂O solutions in which the samples were left for some hours.

Breaking-load test (g/tex) was performed according to ASTM D 1445/2524.

### General procedure

A linen sliver was dipped in the selected alkylating reagent for a proper time (contact time) and at a suitable temperature. It was then centrifugated for about 10 minutes at 1000 r.p.m.. The procedure can be repeated twice (double imbibition). Afterwards the sample was kept under vacuum at 40°C for about 2 hours. The sliver was then dipped into a non-aqueous basic solution, at the reported temperature, and left for the indicated contact time. The final product was washed first with the same solvent used for the basic solution and then with water up to neutral pH.

### Example 2

### Alkylation reaction with glycidyltrimethylammonium chloride

The following experiments (table 1) were carried out according to the general procedure described in example 1. Glycidyltrimethylammonium chloride (Fluka) was used as alkylating agent and step b) was performed at 50°C and for a contact time of 60 minutes.

Experiments 1,2 and 3 (comparative experiments) were performed in aqueous basic media while experiments 4 to 15 in non-aqueous basic media, according to the present invention.

The ratio AX/n (DS) has been measured by ¹³C-NMR by measuring the area of the peaks at 104 ppm typical of cellulose and at 55 ppm typical of the three methyl of glycidyltrimethylammonium chloride.

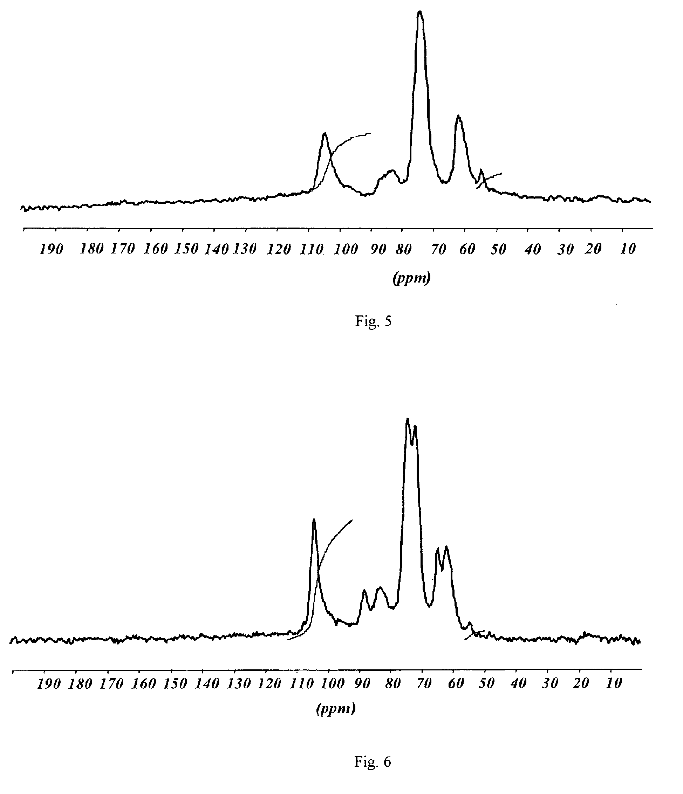

Figures 5 and 6 show the spectrum obtained respectively with sample 3 and 11.

NMR data show that all the products were alkylated (signal at 55 p.p.m., 3 CH₃) and that the crystalline structure of O-alkylated cellulose of experiments 4 to 15 was the native form, that is allomorph I.

On the contrary the alkylated products obtained with aqueous bases (experiments 1 to 3) had an allomorph II structure.

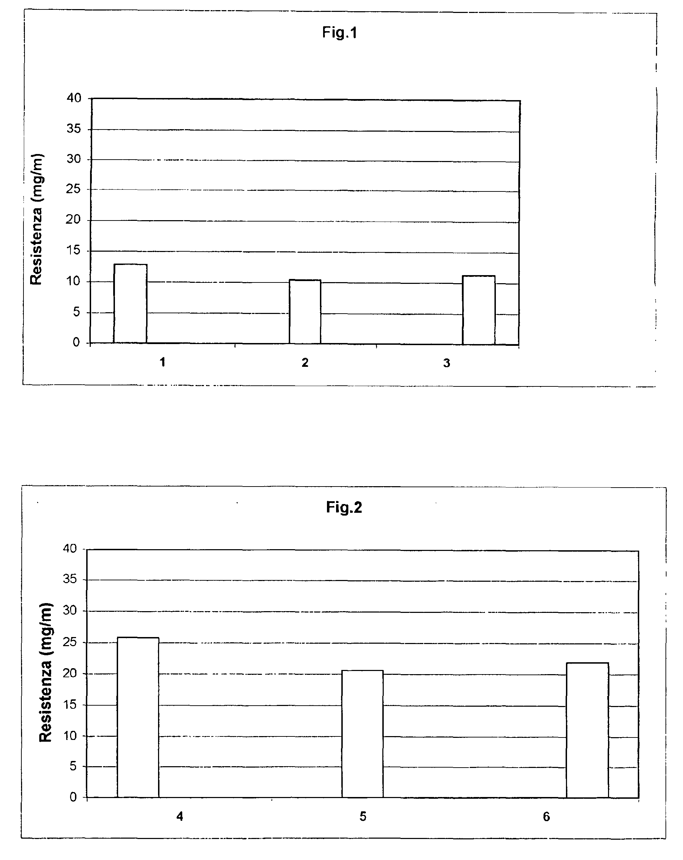

Breaking-load resistance data demonstrate that the samples 4, 5 and 6 (fig. 2) have a greater resistance than samples 1,2 and 3 (fig. 1). Therefore it can be concluded that the aqueous basic alkylating treatment used in the art causes an evident weakening of cellulose fibers, while the process object of the present invention allows to maintain the strength of native cellulose I fibers.

**Table 1**

| *Step A* | | | | *Step B* | | |
|---|---|---|---|---|---|---|
| Exp. n. | T (°C) | Contact time (min) | Base | Solvent | Conc. | DS (AX/n) |
| 1 (comp.) | 50 | 30 | NaOH | H₂O | 16% | 0.060 |
| 2 (comp.) | " | " | " | " | 18% | 0.050 |
| 3 (comp.) | " | " | " | " | 24% | 0.060 |
| 4 | " | " | " | CH₃OH | 24% | 0.020 |
| 5 | " | " | KOH | i-C₃H₇OH | 8% | 0.050 |
| 6 | " | " | NaOH | C₂H₅OH | 12% | - |
| 7 | " | " | CH₃ONa | CH₃OH | 0.2M | 0.030 |
| 8 * | Room | 15 | " | " | " | 0.020 |
| 9 | 50 | 30 | " | " | 0.5M | 0.020 |
| 10 | " | " | " | " | 1.0M | 0.020 |
| 11 | " | " | " | " | 5.4M | 0.025 |
| 12 | " | " | C₂H₅ONa | C₂H₅OH | 2.1M | - |
| 13 | " | " | " | i-C₃H₇OH | 0.27M | 0.030 |
| 14** | " | " | C₂H₅ONa | C₂H₅OH | 2.1M | - |
| 15** | " | " | " | i-C₃H₇OH | 0.27M | 0.030 |

| | | | | | | |
|---|---|---|---|---|---|---|
| *double imbibition | | | | | | |
| ** step b) was performed 19 hours after step a) | | | | | | |

### Example 3

### Alkylation reaction with epichlorohydrin

The following experiments (table 2) were carried out according to the general procedure described in Example 1. Epichlorohydrin (Aldrich) was used as difunctionalized alkylating agent. Step a) was performed at 50°C and for a contact time of 30 minutes while step b) at 50°C and for a contact time of 60 minutes.

**Table 2**

| *Step B* | | | |
|---|---|---|---|
| Exp. n. | Base | Solvent | Conc. |
| 16 (comp.) | NaOH | H₂O | 24% |
| 17 | CH₃ONa | CH₃OH | 0.2M |
| 18 | CH₃ONa | CH₃OH | 1.0M |

Experiment 16 (comparison experiment) was performed in aqueous basic media while experiments 17 and 18 in non-aqueous basic media, according to the present invention.

NMR data show that the crystalline structure of alkylated cellulose of experiments 17 and 18 was the native form, that is allomorph 1. [dati di conferma cross-linking?]

On the contrary the product obtained with aqueous bases (experiment 16) had an allomorph 11 structure.

### Example 4

### Alkylating reaction with poly(propylene glycol)diglycidyl ether

The following experiments (table 3) were carried out according to the general procedure described in Example 1. Poly(propylene glycol)diglycidyl ether (Aldrich, average molecular weight by number ~380) was used as difunctionalized alkylating agent. Step a) was performed at 50°C and for a contact time of 30 minutes while step b) at 50°C and for a contact time of 60 minutes.

Experiment 19 (comparison experiment) was performed in aqueous basic media while experiments 20 to 22 in non-aqueous basic media, according to the present invention.

NMR data show that all the products were alkylated (signal at 19 p.p.m., CH₃) and that the crystalline structure of alkylated celluloses of experiments 20 to 22 was the native form, that is allomorph I.

On the contrary the cross-linked product obtained with aqueous bases (experiment 19) had an allomorph II structure.

**Table 3**

| *Step B* | | | |
|---|---|---|---|
| Exp. n. | Base | Solvent | Conc. |
| 19 (comp.) | NaOH | H₂O | 24% |
| 20 | CH₃ONa | CH₃OH | 0.2M |
| 21* | CH₃ONa | CH₃OH | 0.2M |
| 22 | CH₃ONa | CH₃OH | 1M |

| | | | |
|---|---|---|---|
| *double imbibition | | | |

### Example 5

### Breaking load resistance

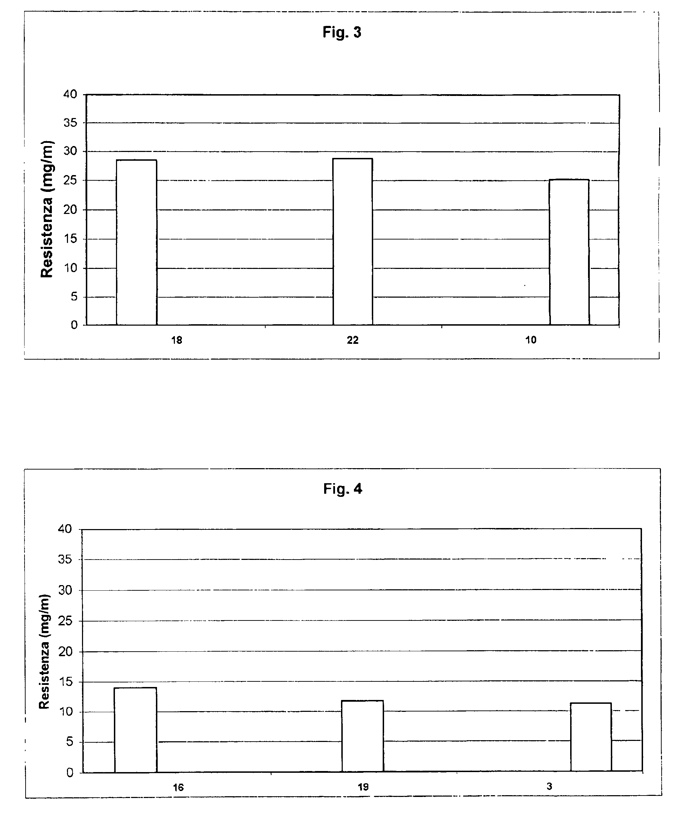

Figures 3 and 4 show the breaking load resistance values of some alkylated samples. In particular, figure 3 relates to alkylated samples prepared according to the present invention, that is under non aqueous basic conditions (1M sodium methoxide in methanol), by using, respectively epichlorohydrin, poly(propylene glycol)diglycidyl ether and glycidyltrimethylammonium chloride as alkylating agents. Figure 4 refers to samples treated with the same alkylating reagents but activated by a standard procedure (aqueous basic medium, 24% NaOH aq.).

By comparing figures 3 and 4 it is evident that the samples prepared according to the process of the present invention had a greater resistance than that of samples obtained under standard aqueous conditions.

## Claims

1. An O-alkylated cellulose I of formula I 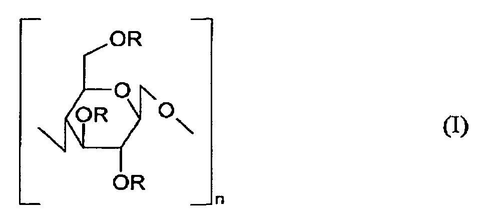 wherein
n is an integer from 100 to 100,000
R is a hydrogen, a group of formula AX in which A is a bivalent bridging radical comprising from I to 100 carbon atoms and, optionally, from 1 to 50 heteroatoms selected from halogens, oxygen, nitrogen, sulphur, boron, phosphorus and silicon, and X is a hydrogen, a functional group selected from vinyl, aziridino, epoxy, glycidyl, halo, acyloxy, alkylsulphonate, arylsulphonate, trialkylsiloxy, sulphate, phosphate, ethynyl, amino, mono-, di- amino, trialkylammonium, carboxy, sulphonic, phosphonic, formyl, alkylsulphonylamino, arylsulphonylamino, aminosulphonyl, acylamino, imino, mono-, di(carboxyalkyl)imino, guanidino, nitro, cyano, alkoxycarbonyl, aminocarbonyl, thioureido, mercapto, aminomethylphosphonic, alkylthio groups or an O-cellulose I radical derived from formula I;
provided that AX groups are present in a AX/n ratio from 0.0001 to 3, wherein the starting material in the preparation of the O-alkylated cellulose are linen fibers.

2. An O-alkylated cellulose according to claim 1 wherein A is a C₁-C₁₈ linear aliphatic radical, optionally substituted by one or more hydroxyl groups.

3. An O-alkylated cellulose according to claims 1-2 wherein A is poly(oxyethylene), poly(oxypropylene), poly(ethyleneimine) and poly(propyleneiznine), optionally substituted by one or more hydroxyl groups.

4. An O-alkylated cellulose according to claims 1-3 wherein X is a ionizable or charged group.

5. An O-alkylated cellulose according to claims 1-4 wherein X is an O-cellulose I radical derived from formula I.

6. A process for preparing an O-alkylated cellulose according to claims 1-5 comprising the steps of:
a) applying an alkylating reagent to cellulose containing materials and
b) treating the cellulose materials with a base in a non-aqueous medium.

7. A process according to claim 6 wherein step a) is performed before step b).

8. A process according to claims 6-7 wherein the alkylating reagent is a compound of formula
X'-A-X (II)
wherein X and A have the meanings reported in claim 1 and X' is a reactive group selected from vinyl, aziridino, epoxy, glycidyl, halo, acyloxy, alkylsulphonate, arylsulphonate, trialkylsiloxy, sulphate and phosphate groups.

## Revendications

1. Cellulose 1 O-alkylée de la formule 1 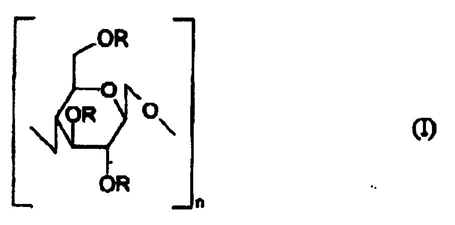 dans laquelle
n est un nombre entier de 100 à 100 000
R représente de l'hydrogène, un groupe de formule AX dans laquelle A est un radical de pontage comportant de 1 à 100 atomes de carbone et, le cas échéant, de 1 à 50 hétéroatomes choisis parmi des halogènes, de l'oxygène, de l'azote, du soufre, du bore, du phosphore et du silicium, et X représente de l'hydrogène, un groupe fonctionnel choisi parmi des groupes vinyle, aziridino, époxy, glycidyle, halogène, acyloxy, alkylsulfonate, arylsulfonate, trialkylsiloxy, sulfate, phosphate, éthynyle, amino, mono-, diamino, trialkylammonium, carboxy, sulfonique, phosphonique, formyle, alklysulfonylamino, arylsulfonylamino, aminosulfonyle, acylamino, imino, mono-, di(carboxyalkyl)imino, guanidino, nitro, cyano, alcoxycarbonyle, aminocarbonyle, thiouréido, mercapto, aminométhylphosphonique, alkylthio ou un radical O-cellulose I dérivé de la formule I, pour autant que les groupes AX soient présents en un rapport AX / n de 0,0001 à 3, où la matière de départ de la préparation de la cellulose O-alkylée est de la fibre de lin.

2. Cellulose O-alkylée selon la revendication 1, dans laquelle A est un radical aliphatique linéaire en C₁ à C₁₈, éventuellement substitué par un ou plusieurs groupes hydroxyle.

3. Cellulose O-alkylée selon les revendications 1 - 2, dans laquelle A est du poly(oxyéthylène), du poly(oxypropylène), de la poly(éthylèneimine) et de la poly(propylèneimine), le cas échéant substitué(e) par un ou plusieurs groupes hydroxyle.

4. Cellulose O-alkylée selon les revendications 1-3. dans laquelle X est un groupe ionisable ou chargé.

5. Cellulose O-alkylée selon les revendications 1-4, dans laquelle X est un radical O-cellulose I dérivé de la formule I.

6. Procédé de préparation d'une cellulose O-alkylée, comprenant les étapes suivantes :
a) application d'un agent d'alkylation sur des matières contenant de la cellulose, et
b) traitement des matières cellulosiques par une base en milieu non aqueux.

7. Procédé selon la revendication 6, dans lequel l'étape a) est entreprise avant l'étape b).

8. Procédé selon les revendications 6-7, dans lequel l'agent d'alkylation est un composé de formule
X'-A-X (II)
dans laquelle X et A ont les significations reprises dans la revendication 1, et X' est un groupe réactif choisi parmi des groupes vinyle, aziridino, époxy, glycidyle, halogène, acyloxy, alkylsulfonate, arylsulfonate, trialkylsiloxy, sulfate et phosphate.

## Patentansprüche

1. Eine O-alkylierte Cellulose I der Formel I, 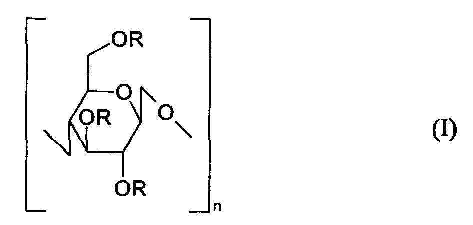 worin
n eine ganze Zahl von 100 bis 100.000 ist
R ein Wasserstoff, eine Gruppe der Formel AX ist, in der A ein zweiwertiges Brückenradikal ist, das von 1 bis zu 100 Kohlenstoffatome und wahlweise von 1 bis zu 50 Heteroatome, ausgewählt aus Halogenen, Sauerstoff, Stickstoff, Schwefel, Bor, Phosphor und Silicium, enthält, und X ein Wasserstoff, eine funktionelle Gruppe, ausgewählt aus Vinyl-, Aziridin-, Epoxy-, Glycidyl-, Halogen-, Acyloxy-, Alkylsulfonat-, Arylsulfonat-, Trialkylsiloxy-, Sulfat-, Phosphat-, Ethinyl-, Amino-, Mono-, Diamino-, Trialkylammonium-, Carboxy-, Sulfo-, Phosphon-, Formyl-, Alkylsulfonylamino-, Arylsulfonylamino-, Aminosulfonyl-, Acylamino-, Imino-, Mono-, Di(carboxyalkyl)imino-, Guanidino-, Nitro-, Cyano-, Alkoxycarbonyl-, Aminocarbonyl-, Thioureido-, Mercapto-, Aminomethylphosphon-, Alkylthio-Gruppen, ist oder ein von Formel I abgeleitetes O-Cellulose 1-Radikal ist;
vorausgesetzt, dass die AX-Gruppen in einem AX/n-Verhältnis von 0.0001 bis 3 vorliegen, wobei das Ausgangsmaterial bei der Herstellung der O-alkylierten Cellulose Leinenfasern sind.

2. Eine O-alkylierte Cellulose nach Anspruch 1, worin A ein lineares, aliphatisches, wahlweise durch eine oder mehrere Hydroxylgruppen substituiertes C₁-C₁₈- Radikal ist.

3. Eine O-alkylierte Cellulose nach den Ansprüchen 1-2, worin A Polyoxyethylen, Polyoxypropylen, Polyethylenimin und Polypropylenimin ist, wahlweise substituiert durch eine oder mehrere Hydroxylgruppen.

4. Eine O-alkylierte Cellulose nach den Ansprüchen 1 - 3, worin X eine ionisierbare oder geladene Gruppe ist.

5. Eine O-alkylierte Cellulose nach den Ansprüchen 1 - 4, worin X ein von Formel I abgeleitetes O-Cellulose 1-Radikal ist.

6. Ein Verfahren zur Herstellung einer O-alkylierten Cellulose nach den Ansprüchen 1 - 5, enthaltend die Schritte:
a) Anwenden eines Alkylierungsreagenzes auf cellulosehaltige Materialien und
b) Behandeln der Cellulosematerialien mit einer Base in einem nichtwässrigen Medium.

7. Ein Verfahren nach Anspruch 6, worin Schritt a) vor Schritt b) durchgeführt wird.

8. Ein Verfahren nach den Ansprüchen 6 - 7, worin das Alkylierungsreagenz eine Komponente der Formel
X'-A-X (II)
ist, worin X und A die in Anspruch 1 wiedergegebenen Bedeutungen haben und worin X' eine aus Vinyl-, Aziridin-, Epoxy-, Glycidyl-, Halogen-, Acyloxy-, Alkylsulfonat-, Arylsulfonat-, Trialkylsiloxy-, Sulfat- und Phosphat-Gruppen ausgewählte reaktive Gruppe ist.
